# EUROPEAN PATENT SPECIFICATION

(11) **EP 3 245 430 B1**
(45) Date of publication and mention of the grant of the patent: **13.05.2020**
(21) Application number: 16709119.8
(22) Date of filing: 15.01.2016
(51) Int. Cl.: F16J 15/34, A23G 9/22, A23G 9/30, F16J 15/36

(54) **MECHANICAL SEAL DEVICE**
MECHANISCHE ABDICHTUNGSVORRICHTUNG
DISPOSITIF DE JOINT MÉCANIQUE

(30) Priority: 16.01.2015 IT BO20150012
(43) Date of publication of application: 22.11.2017
(73) Proprietor: S.P.M. Drink Systems S.P.A., 41057 Spilamberto (MO) (IT)
(72) Inventor: GRAMPASSI, Enrico, 41057 Spilamberto (MO) (IT)
(74) Representative: Manzella & Associati
(86) International application number: PCT/IB2016/050204
(87) International publication number: WO 2016/113711

(56) References cited:
- WO-A1-89/02555
- FR-A1- 2 370 207
- GB-A- 998 478
- US-A- 2 924 952

## Description

### Technical Field

The present invention concerns a mechanical seal device for use in combination with an apparatus for preparing and dispensing fluid or creamy food products, such as for example hot beverages or refrigerated products like water-ices, creamy ice-creams, sorbets and the like.

### Background Art

Currently, apparatuses are known which allow to prepare and dispense refrigerated products such as for example beverages, water-ices, creamy ice-creams, sorbets and the like.

In particular, apparatuses are currently known comprising a tank predisposed to contain the product to be dispensed, to which means predisposed to cool the above mentioned product to a predefined temperature are associated. Inside the tank a mixing device is housed performing the continuous circulation of the product inside the same tank. The mixing device, made up for example of a screw member driven in rotation according to an axis longitudinal to the tank, is predisposed to convey the cooled product towards a front zone, where a dispensing device for the product is placed. The dispensing device is provided with a shutter element which can be operated through an external lever member.

Apparatuses are known as well which allow to prepare and dispense hot beverages, in particular beverages obtained by mixing water with soluble products in previously established doses, for example chocolate. Such apparatuses are generally provided with a water-heating boiler, with one or more containers for the soluble products and with a mixing device for dosed quantities of water and soluble product. A dispensing device, arranged at a front zone of the apparatus, allows to dispense the so prepared hot beverage.

In the cited apparatuses there exist the need of ensuring the mechanical seal of the tank containing the product, in particular at the shaft which drives in rotation the screw member of the mixing device. This member is, in fact, operated by an electric motor placed outside the tank, therefore the shaft of the screw member protrudes from a rear opening of the tank.

To such aim, mechanical seal devices are known which engage the rotating shaft at the zone in which it protrudes from the tank.

US 2,924,952 discloses an apparatus for preparing and dispensing refrigerated products such as for example creamy ice creams, which is provided with a seal device comprising a gasket which surrounds the shaft of the mixing device and is stressed from the mixing device, through a friction ring, so as to be brought in tightened contact with the front edge of the rear wall of the tank. The gasket is constituted by a conical body, of elastic plastic material.

Another known seal device comprises a rotating ring associated with the rotating shaft and frontally held in contact with the stationary ring associated in hermetic manner with the tank. The rotating ring is held in contact with the stationary ring through a thrust member stressed in axial direction by a metal helical spring.

Mechanical seal devices are shown in FR 2 370 207, GB 998,478 and WO 89/02555, not concerning apparatuses for preparing and dispensing fluid or creamy food products according to the present invention.

Document US 2 924 952 A1 shows in figure 1 an apparatus suitable for preparing and dispensing products which are fluid or creamy, comprising: a tank of containment of the product to be dispensed; a mixing device arranged inside said tank and provided with a shaft predisposed to be brought in rotation according to an axis longitudinal to said tank for causing the circulation of said product inside said tank; means for the heat-treatment of the product contained inside said tank; a dispensing device of said product frontally associated with said tank; and a stationary unit comprising a seal ring associated with the bottom of a cup-shaped support element of polymeric material, the seal ring defining a seal face; said stationary unit being predisposed to be coaxially mounted on said shaft of the mixing device, said cup-shaped support element being adapted to be tightened in use against an opposite end wall of said tank. The tank containing the product in the apparatuses for preparing and dispensing fluid or creamy food products requires a frequent cleaning, usually daily.

The different components of the known mechanical seal device of US 2 924 952 A1 can compromise the maintenance of the hygiene standards required by the food industry equipments.

A specific problem in the use of the cited apparatus of US 2 924 952 is that the rotating surface of the mechanical seal may wear but is costly to replace since it is integral with the mixing device.

### Disclosure

The task of the present invention is to solve the cited problems, providing a device which allows to ensure an optimal mechanical seal in an apparatus for preparing and dispensing fluid or creamy food products.

Within such task, it is a further scope of the present invention to provide a mechanical seal device which allows to ease the assembling and timely maintenance operations.

Another scope of the invention is that of providing a mechanical seal device which ensures to hold a correct contact between the seal surfaces.

Another further scope of the invention is to provide a mechanical seal device which can ensure a high hygienic standard.

Another scope of the invention is to provide a mechanical seal device of simple constructive and functional conception, provided with a surely reliable functioning, versatile use, as well as relatively economic costs.

The cited scopes are reached, according to the present invention, by the apparatus according to claim 1.

According to the present invention, the mechanical seal device comprises a rotating unit and a stationary unit respectively comprising a seal ring associated in removable manner with the bottom of a support element of polymeric material having the shape of a circular sucker and defining a respective seal face.

Said rotating unit and said stationary unit are predisposed to be coaxially mounted on a shaft of a rotating member, in specular position, so as to displace said seal rings with said seal faces in mutual contact on a plane substantially perpendicular to the axis of said shaft.

Preferably, said seal rings have a substantially polygonal cross-sectional profile, and a respective side of said polygonal profile constitutes said seal face.

Preferably, said substantially polygonal profile of the seal rings has a specular shape with respect to a plane perpendicular to the axis of said shaft.

Preferably, said polygonal profile of the seal rings has a substantially quadrilateral shape.

Preferably, said seal rings are made of ceramic material.

Advantageously, said rotating member is constituted by a mixing device arranged inside a containment tank for the product to be dispensed in an apparatus for preparing and dispensing fluid or creamy food products.

Advantageously, said support elements are tightened in use respectively against an abutment surface shaped by said mixing device and against an opposite bottom wall of said tank.

Said support elements have at the bottom a housing seat respectively for said rings of ceramic material.

Advantageously, said support elements have cup-shape.

Preferably, said cup-shaped support elements have substantially frustoconical profile.

Preferably, said cup-shaped support elements have an edge circular lip with narrowed cross-section, predisposed to adhere in use respectively to said abutment surface shaped by the mixing device and to said bottom wall of the tank.

Advantageously, said cup-shaped support elements are made of silicone.

### Description of Drawings

Details of the invention shall be more apparent from the detailed description of a preferred embodiment of the mechanical seal device according to the invention, illustrated for indicative purposes in the attached drawings, wherein:

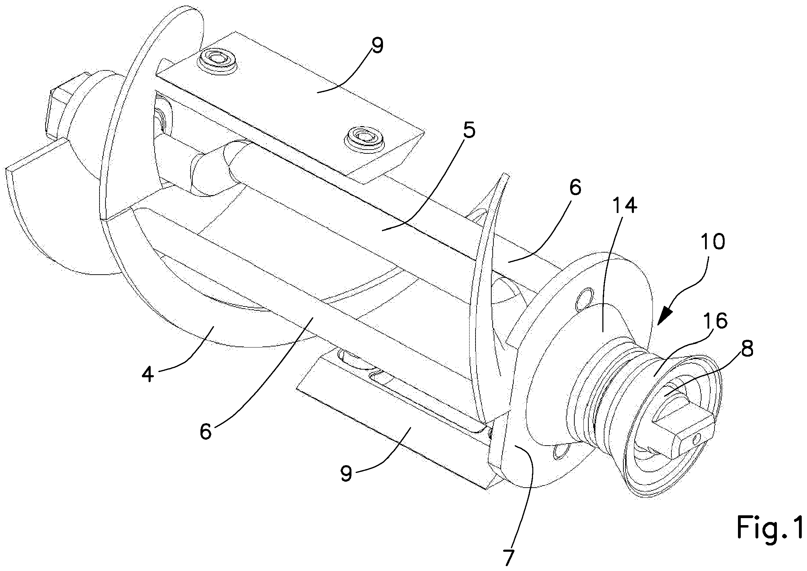

Figure 1 shows a perspective view of a rotating member provided with the mechanical seal device according to the invention;

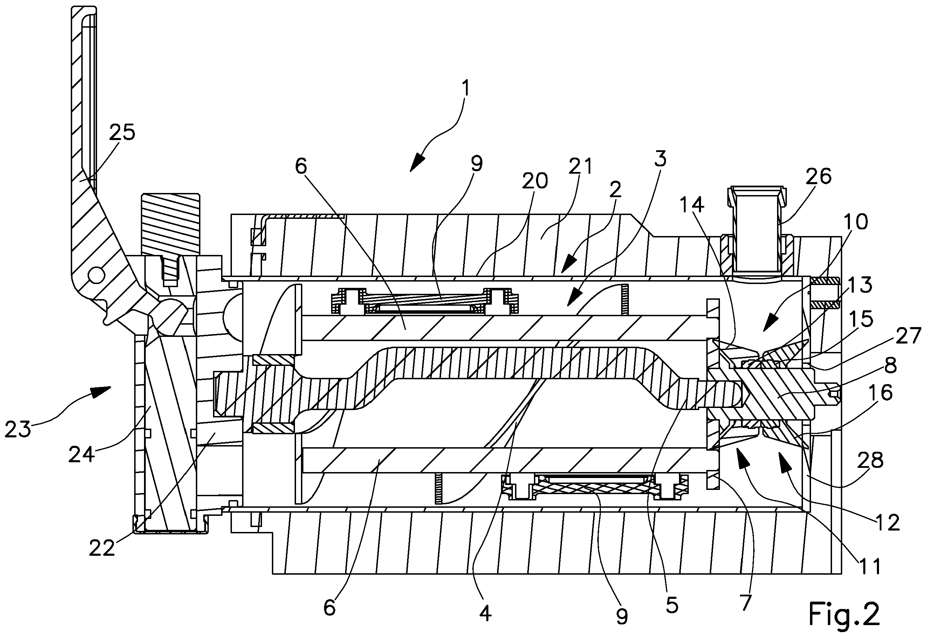

Figure 2 shows a longitudinal cross-section view of an apparatus for dispensing refrigerated products provided with the above mentioned rotating member;
Figures 3 and 4 show a longitudinal cross-section view of the mechanical seal device respectively in assembling step and in use configuration;
Figure 5 shows a longitudinal cross-section view of the same apparatus with a different embodiment of the mechanical seal device according to the invention.

### Best Mode

With particular reference to such figures, the apparatus for preparing and dispensing refrigerated products, such as for example ice-waters, creamy ice-creams, sorbets and the like, provided with the mechanical seal device 10 according to the present invention, is indicated in its entirety with 1.

The apparatus 1 comprises a containment tank 2 for containing the product to be dispensed, inside which a mixing device 3 is arranged, for performing the circulation of the product inside the same tank 2. The mixing device 3 is constituted, in known manner, by a screw member 4 which extends in helical manner about a central hub 5 which, in the illustrated case, is gooseneck shaped. More precisely, the screw member 4 is supported by a plurality of longitudinal tie rods 6, which extend from a rear plate 7, arranged on a plane perpendicular to the axis of the shaft 5; at the front, the tie rods 6 are fixed to an end portion of the same screw member 4. At the rear plate 7, the mixing device 3 is associated with a shaft 8 predisposed to be brought in rotation according to an axis longitudinal to the tank 2, through a motor member not shown in the drawings.

In the illustrated case, the tank 2 is made up of a cooling cylinder 20 arranged with horizontal axis inside a body 21, in which suitable heat-treatment means for the product contained inside the tank 2 are housed. In particular, such heat-treatment means are made up of a cooling device for cooling the product to the suitable temperature, for example the evaporator coil of a refrigeration system, known per se and not shown in the drawings.

The cooling cylinder 20 is closed at its front by a wall 22, to which a dispensing device 23 is associated. The dispensing device 23 is provided with a shutter member 24 which can be operated by an external lever member 25.

Moreover, a product supply duct 26 is further associated with the cooling cylinder 20 at a substantially rear zone. The product is supplied inside the cooling cylinder 20 from a further tank not shown in the drawings by effect of the force of gravity or through a suitable pump.

Usefully, respective runners 9 are connected to the tie rods 6 of the mixing device 3, for brushing the inner surface of the cooling cylinder 20, in order to prevent the formation of ice.

The mechanical seal device 10 comprises a rotating unit 11 and a stationary unit 12 shaped in similar manner and predisposed to be coaxially mounted, in specular position, on the shaft 8 of the mixing device 3. More precisely, the shaft 8 is coaxially associated with the hub 5 of the screw member 4 and is fixed to the rear plate 7 of such screw member 4; the shaft 8 protrudes outwardly through an axial opening 27 of a wall 28 which posteriorly closes the cooling cylinder 20.

The rotating unit 11 comprises a first ring 13 associated in removable manner with the bottom of a first support element 14 having sucker shape; the ring 13 defines a first seal face.

The stationary unit 12 comprises a second ring 15 associated in removable manner with the bottom of a second support element 16 having sucker shape; the ring 15 defines a second seal face.

The seal rings 13, 15 have substantially polygonal profile in their axial cross-section, for example quadrilateral shape, and a respective side of said polygonal profile realizes the seal face.

Preferably, said polygonal profile of the seal rings has specular shape with respect to a plane perpendicular to the axis of the shaft 8, so as to allow to change the assembling direction on the support elements 14, 16.

The seal rings 13, 15 are made of a material having high hardness. Preferably, the seal rings 13, 15 are made of ceramic material, for example silicone carbide.

Preferably, the support elements 14, 16 are made of polymeric material, for example silicone.

More in particular, the support elements 14, 16 having sucker shape are made up of a bowl or cup having frustoconical profile and have, at the bottom, an opening which defines the housing seat for the respective seal ring 13, 15. Such ring 13, 15 is slightly protruding with respect to the bottom of the support elements 14, 16 so that the respective seal face is external with respect to the same support element. From the opposite side, the support elements 14, 16 having sucker shape peripherally have a circular lip 14a, 16a with narrowed cross-section, predisposed to adhere in use to an opposite abutment flat surface, as it is specified in the following.

Advantageously, the seal rings 13, 15 are steadily held in the above mentioned housing seats of the support elements 14, 16 by means of an annular rib obtained on the peripheral surface of the same rings 13, 15.

The functioning of the mechanical seal device is easy to understand from the preceding description.

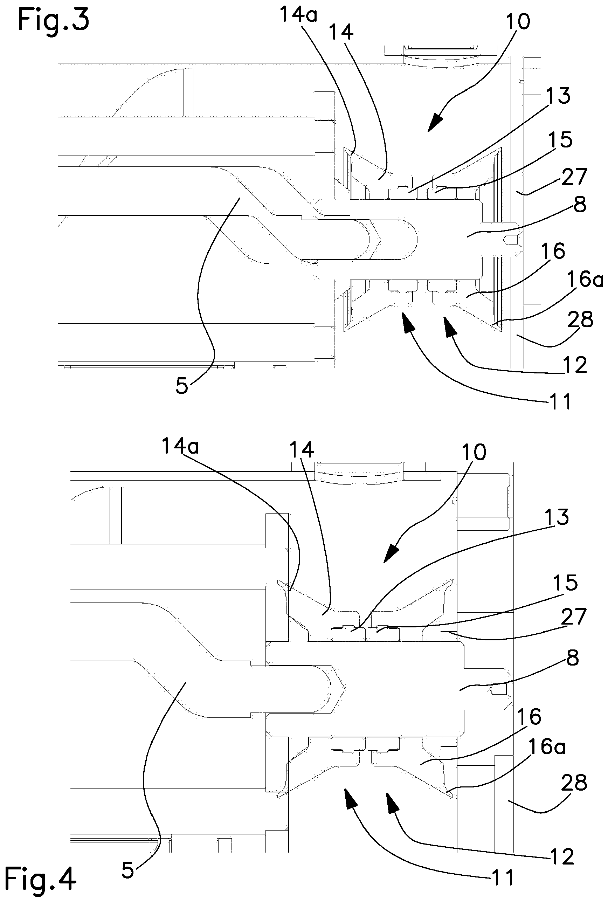

The rotating unit 11 and the stationary unit 12 of the seal device 10 are predisposed to be coaxially mounted on the shaft 8 of the mixing device 3, in specular position, so as to displace said first and second rings 13, 15 of ceramic material with the respective seal faces in front of each other (Fig. 3); by tightening the seal device 10, the seal faces of the rings 13, 15 are mutually brought in contact on a plane substantially perpendicular to the axis of the same shaft 8 of the mixing device 3 (Fig. 4).

The cup-shaped support elements 14, 16 are tightened in use respectively between an abutment flat surface shaped by the plate 7 of the mixing device 3 and the opposite bottom wall 28 of the tank 2. In such configuration, an axial pressure and a subsequent deformation of both the support elements 14, 16 are produced, such as to produce an axial thrust which elastically holds in contact the opposite seal faces of the rings 13, 15. In particular, such deformation is produced at the circular lip 14a, 16a of narrowed cross-section, once such lip is in abutment respectively on the flat surface of the plate 7 and of the bottom wall 28. It is to be observed that the cited deformation of the circular lip 14a, 16a has not been represented in the drawings but it has been represented the portion of the not compressed cross-section which is interfering with the relative abutment surface which is therefore intended to deform, thus generating the axial thrust.

When the mixing device 3 is driven in rotation, the rotating unit 11 of the seal device 10 is drawn in rotation integrally with the same mixing device 3, as the relative support element 14 adheres to the plate 7; while the support element 16 of the stationary unit 12 adheres to the bottom wall 28 of the tank 2.

It is to be observed that in use the peripheral lip 16a of the second support element 16 completely surrounds the axial opening 27 of the wall 28 which closes at its back the cooling cylinder 20; in this way the cited lip 16a strictly adheres to this wall 28 and consequently creates the hermetic seal at the opening 27.

The device according to the invention reaches therefore the scope of ensuring an optimal mechanical seal in an apparatus for preparing and dispensing fluid or creamy food products.

The mechanical seal device according to the invention has a very simple structure and can be mounted in simple manner on the rotating shaft inside the tank. In particular, the rotating unit and the stationary unit of the seal device are similarly constituted by two single components, a seal ring of ceramic material and a relative polymeric support element, preferably silicone. Therefore, the assembling of the seal device only requires the insertion of the cited support elements carrying the rings of ceramic martial in specular position on the rotating shaft. This considerably reduces the possibility of mistakes in the assembling step and makes the cleaning of the seal device very easy, once the rotating shaft has been removed.

It is to be underlined that the rotating unit and the stationary unit of the seal device are realized in identical manner and are therefore interchangeable to each other. This contributes to ease the mounting of the mechanical seal device. In practice, the only caution to be respected is to insert the two units on the shaft in specular position, with the respective rings in front of each other (see again Fig. 3).

A feature of the mechanical seal device according to the invention that, by the effect of the own elasticity of the used polymeric material, preferably silicone, the support elements are able to adjust possible slight misalignments, keeping in this way the seal faces of the rings of ceramic material always perfectly in contact to one another.

Another advantage offered by the mechanical seal device according to the invention is that the seal ring can be inserted in the seat predisposed in the support element in both directions, that is having outwardly the one or the other front face. This allows in substance to double the life of the seal rings and thus the life of the same device, the seal rings being the components most subject to wear and tear.

The seal device is moreover of cheap realization, both because of the limited number of components to be used, and because of the use of a polymeric material as silicone for obtaining the support elements.

The device described by way of example is susceptible of various modifications and variants according to the different needs. In the case illustrated by way of example, the device has been applied to an apparatus for preparing and dispensing refrigerated products, such as ice-creams and the like, in which the mixing device is inside a cooling cylinder having the suitable cooling means outside. The mechanical seal device according to the invention can be similarly applied to apparatuses provided with cooling means arranged inside the containment tank of the product or in apparatuses for preparing hot beverages.

Moreover the seal rings can be of different but equivalent materials, for example steatite or graphite impregnated with resin carbon, commonly used in the considered field.

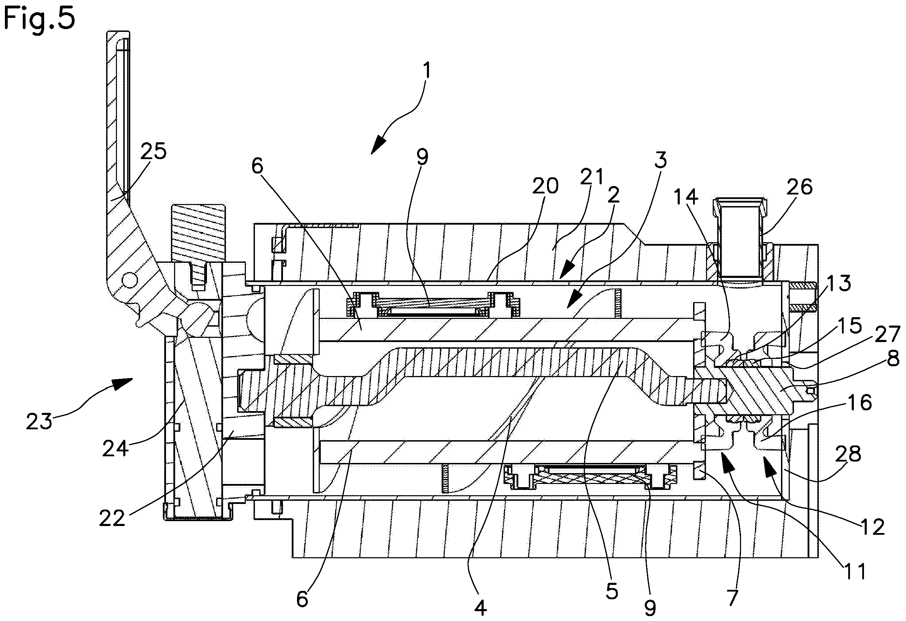

In Fig. 5 a different embodiment of the mechanical seal device is shown, in combination with the previously described mixing device. In this case the cup-shaped support elements of the rotating unit and of the stationary unit, for more clarity indicated again with 14 and 16, have a substantially cylindrical lateral surface. The support of the support elements 14, 16 on the respective abutment surface occurs on the annular rim defined frontally to such cylindrical surface.

In practice, the used materials as well as the size and shape may vary according to the needs.

Should the technical characteristics mentioned in the claims be followed by reference signs, such reference signs were included for the sole purpose of increasing the understanding of the claims and thus they shall not be deemed limiting the scope of the element identified by such reference signs by way of example.

## Claims

1. An apparatus suitable for preparing and dispensing food products which are fluid or creamy, said apparatus comprising
a mechanical seal device (10);
a tank (2) of containment of the product to be dispensed;
a mixing device (3) arranged inside said tank (2) and provided with a shaft (8) predisposed to be brought in rotation according to an axis longitudinal to said tank (2) for causing the circulation of said product inside said tank (2);
means for the heat-treatment of the product contained inside said tank (2);
a dispensing device (23) of said product frontally associated with said tank (2);
wherein said mechanical seal device (10) comprises a rotating unit (11) comprising a first seal ring (13) associated with the bottom of a first cup-shaped support element (14) of polymeric material, the first seal ring (13) defining a first seal face;
a stationary unit (12) comprising a second seal ring (15) associated with the bottom of a second cup-shaped support element (16) of polymeric material, the second seal ring (15) defining a second seal face;
said rotating unit (11) and said stationary unit (12) being predisposed to be coaxially mounted on said shaft (8) of the mixing device (3), facing each other, so as to have said first and second seal ring (13, 15) arranged with said first and second seal face in mutual contact on a plane substantially perpendicular to said axis of the shaft (8) of the mixing device (3);
said first and second cup-shaped support element (14, 16) being adapted to be tightened in use respectively against an abutment surface (7) of said mixing device (3) and against an opposite end wall (28) of said tank (2).

2. Apparatus according to claim 1, wherein said first and second cup-shaped support element (14, 16) have at the bottom a seat for housing respectively said first and second seal ring (13, 15).

3. Apparatus according to claim 2, wherein first and second seal ring (13, 15) are associated in removable manner with said housing seat of the first and second support element (14, 16).

4. Apparatus according to claim 1 or 3, wherein said first and second cup-shaped support element (14, 16) have substantially frustoconical profile and peripherally have a deformable circular lip (14a, 16a) with narrowed cross-section, predisposed to adhere in use respectively against said abutment surface (7) of the mixing device (3) and against said end wall (28) of the tank (2).

5. Apparatus according to claim 4, wherein said circular lip (14a, 16a) of the second support element (16) completely surrounds in use an axial opening (27) of said end wall (28) of the tank (2) through which said shaft (8) is passing.

6. Apparatus according to one of the preceding claims, wherein said first and second seal ring (13, 15) have axial cross-section with substantially polygonal shape, and a respective side of said polygonal profile shapes said first and second seal face.

7. Apparatus according to claim 6, wherein said substantially polygonal profile of the first and second seal ring (13, 15) has specular shape with respect to a plane perpendicular to the axis of said shaft (8).

8. Apparatus according to one of the preceding claims, wherein said first and second seal rings (13, 15) are made of ceramic material.

9. Apparatus according to one of the preceding claims, wherein said first and second cup-shaped support element (14, 16) are made of silicone.

10. Apparatus according to one of the preceding claims, wherein said rotating unit (11) and said stationary unit (12) are made in identical manner and are mutually interchangeable.

11. Apparatus according to one of the preceding claims, wherein said first and second seal ring (13, 15) are slightly protruding with respect to the bottom of said first and second support element (14, 16), in such a way that the respective seal face is external to the same support element.

## Patentansprüche

1. Einrichtung, die zum Vorbereiten und Ausgeben von Lebensmittelprodukten, die flüssig oder cremig sind, geeignet ist, wobei die Einrichtung Folgendes umfasst
eine mechanische Dichtungsvorrichtung (10);
einen Tank (2) zum Enthalten des auszugebenden Produkts;
eine Mischvorrichtung (3), die im Tank (2) angeordnet und mit einer Welle (8) versehen ist, die dazu ausgelegt ist, gemäß einer Achse längs zum Tank (2) in Drehung versetzt zu werden, um die Zirkulation des Produkts im Tank (2) zu bewirken;
ein Mittel zur Wärmebehandlung des im Tank (2) enthaltenen Produkts;
eine Ausgabevorrichtung (23) des Produkts, die frontal mit dem Tank (2) verknüpft ist;
wobei die mechanische Dichtungsvorrichtung (10) Folgendes umfasst eine Dreheinheit (11), die einen ersten Dichtring (13) umfasst, der mit dem Boden eines ersten becherförmigen Stützelements (14) aus polymerischem Material verknüpft ist, wobei der erste Dichtring (13) eine erste Dichtseite definiert;
eine stationäre Einheit (12), die einen zweiten Dichtring (15) umfasst, der mit dem Boden eines zweiten becherförmigen Stützelements (16) aus polymerischem Material verknüpft ist, wobei der zweite Dichtring (15) eine zweite Dichtseite definiert;
wobei die Dreheinheit (11) und die stationäre Einheit (12) dazu ausgelegt sind, an der Welle (8) der Mischvorrichtung (3) einander zugewandt koaxial montiert zu sein, sodass der erste und der zweite Dichtring (13, 15) derart angeordnet sind, dass die erste und die zweite Dichtseite auf einer Ebene, die im Wesentlichen senkrecht zur Achse der Welle (8) der Mischvorrichtung (3) in gegenseitigem Kontakt sind;
wobei das erste und das zweite becherförmige Stützelement (14, 16) angepasst sind, im Gebrauch gegen eine Anschlagfläche (7) der Mischvorrichtung (3) bzw. gegen eine gegenüberliegende Stirnwand (28) des Tanks (2) abgedichtet sind.

2. Einrichtung nach Anspruch 1, wobei das erste und das zweite becherförmige Stützelement (14, 16) am Boden einen Sitz zum Aufnehmen des ersten bzw. des zweiten Dichtrings (13, 15) aufweisen.

3. Einrichtung nach Anspruch 2, wobei der erste und der zweite Dichtring (13, 15) mit dem Aufnahmesitz des ersten und des zweiten Stützelements (14, 16) in entfernbarer Weise verknüpft sind.

4. Einrichtung nach Anspruch 1 oder 3, wobei das erste und das zweite becherförmige Stützelement (14, 16) ein im Wesentlichen kegelstumpfförmiges Profil sowie umfänglich eine verformbare kreisförmige Lippe (14a, 16a) mit verengtem Querschnitt aufweisen, die dazu ausgelegt ist, im Gebrauch an der Anschlagfläche (7) der Mischvorrichtung (3) und an der Stirnwand (28) des Tanks (2) zu haften.

5. Einrichtung nach Anspruch 4, wobei die kreisförmige Lippe (14a, 16a) des zweiten Stützelements (16) eine axiale Öffnung (27) der Stirnwand (28) des Tanks (2), durch die die Welle (8) verläuft, im Gebrauch vollständig umgibt.

6. Einrichtung nach einem der vorhergehenden Ansprüche, wobei der erste und der zweite Dichtring (13, 15) einen axialen Querschnitt mit im Wesentlichen polygonaler Form aufweisen und eine jeweilige Seite des polygonalen Profils die erste und die zweite Dichtseite formt.

7. Einrichtung nach Anspruch 6, wobei das im Wesentlichen polygonale Profil des ersten und des zweiten Dichtrings (13, 15) mit Bezug auf eine Ebene senkrecht zur Achse der Welle (8) eine spiegelbildliche Form aufweist.

8. Einrichtung nach einem der vorhergehenden Ansprüche, wobei der erste und der zweite Dichtring (13, 15) aus Keramikmaterial bestehen.

9. Einrichtung nach einem der vorhergehenden Ansprüche, wobei das erste und das zweite becherförmige Stützelement (14, 16) aus Silikon bestehen.

10. Einrichtung nach einem der vorhergehenden Ansprüche, wobei die Dreheinheit (11) und die stationäre Einheit (12) in identischer Weise hergestellt und gegenseitig austauschbar sind.

11. Einrichtung nach einem der vorhergehenden Ansprüche, wobei der erste und der zweite Dichtring (13, 15) mit Bezug auf den Boden des ersten und des zweiten Stützelements (14, 16) in einer derartigen Weise geringfügig vorstehen, dass die jeweilige Dichtseite außerhalb desselben Stützelements liegt.

## Revendications

1. Appareil apte à préparer et distribuer des produits alimentaires qui sont fluides ou crémeux, ledit appareil comprenant
un dispositif d'étanchéité mécanique (10);
un réservoir (2) de confinement du produit à distribuer;
un dispositif de mélange (3) disposé à l'intérieur dudit réservoir (2) et pourvu d'un arbre (8) prédisposé à être amené en rotation selon un axe longitudinal audit réservoir (2) pour provoquer la circulation dudit produit à l'intérieur dudit réservoir (2);
des moyens de traitement thermique du produit contenu à l'intérieur dudit réservoir (2);
un dispositif de distribution (23) dudit produit associé frontalement audit réservoir (2);
où ledit dispositif d'étanchéité mécanique (10) comprend
une unité rotative (11) comprenant une première bague d'étanchéité (13) associée au fond d'un premier élément de support (14) en forme de coupe en matériau polymère, la première bague d'étanchéité (13) définissant une première face d'étanchéité;
une unité stationnaire (12) comprenant une deuxième bague d'étanchéité (15) associée au fond d'un deuxième élément de support (16) en forme de coupe en matériau polymère, la deuxième bague d'étanchéité (15) définissant une deuxième face d'étanchéité;
ladite unité rotative (11) et ladite unité stationnaire (12) étant prédisposées à être montées coaxialement sur ledit arbre (8) du dispositif de mélange (3), se faisant face, de manière à avoir ladite première et deuxième bague d'étanchéité (13, 15) disposées avec ladite première et deuxième face d'étanchéité en contact mutuel sur un plan substantiellement perpendiculaire audit axe de l'arbre (8) du dispositif de mélange (3);
ledit premier et deuxième élément de support (14, 16) en forme de coupe étant adaptés pour être serrés lors de l'utilisation respectivement contre une surface de butée (7) dudit dispositif de mélange (3) et contre une paroi d'extrémité (28) opposée dudit réservoir (2).

2. Appareil selon la revendication 1, où ledit premier et deuxième élément de support (14, 16) en forme de coupe ont au fond un siège pour loger respectivement ladite première et deuxième bague d'étanchéité (13, 15).

3. Appareil selon la revendication 2, où la première et deuxième bague d'étanchéité (13, 15) sont associées de manière amovible audit siège de logement du premier et deuxième élément de support (14, 16).

4. Appareil selon la revendication 1 ou 3, où ledit premier et deuxième élément de support (14, 16) en forme de coupe ont un profil substantiellement tronconique et ont périphériquement une lèvre circulaire (14a, 16a) déformable avec une section transversale rétrécie, prédisposée à adhérer lors de l'utilisation respectivement contre ladite surface de butée (7) du dispositif de mélange (3) et contre ladite paroi d'extrémité (28) du réservoir (2).

5. Appareil selon la revendication 4, où ladite lèvre circulaire (14a, 16a) du deuxième élément de support (16) entoure complètement lors de l'utilisation une ouverture axiale (27) de ladite paroi d'extrémité (28) du réservoir (2) à travers laquelle passe ledit arbre (8).

6. Appareil selon l'une des revendications précédentes, où ladite première et deuxième bague d'étanchéité (13, 15) ont une section transversale axiale avec une forme substantiellement polygonale, et un respectif côté dudit profil polygonal forme ladite première et deuxième face d'étanchéité.

7. Appareil selon la revendication 6, où ledit profil substantiellement polygonal de la première et deuxième bague d'étanchéité (13, 15) a une forme spéculaire par rapport à un plan perpendiculaire à l'axe dudit arbre (8).

8. Appareil selon l'une des revendications précédentes, où ladite première et deuxième bague d'étanchéité (13, 15) sont en matériau céramique.

9. Appareil selon l'une des revendications précédentes, où ledit premier et deuxième élément de support (14, 16) en forme de coupe sont en silicone.

10. Appareil selon l'une des revendications précédentes, où ladite unité rotative (11) et ladite unité stationnaire (12) sont fabriquées de manière identique et sont mutuellement interchangeables.

11. Appareil selon l'une des revendications précédentes, où ladite première et deuxième bague d'étanchéité (13, 15) font légèrement saillie par rapport au fond dudit premier et deuxième élément de support (14, 16), de telle sorte que la respective face d'étanchéité soit extérieure au même élément de support.
